# EUROPÄISCHE PATENTSCHRIFT

(11) **EP 3 358 261 B1**
(45) Veröffentlichungstag und Bekanntmachung des Hinweises auf die Patenterteilung: **13.11.2019**
(21) Anmeldenummer: 18153180.7
(22) Anmeldetag: 24.01.2018
(51) Int. Cl.: F24C 15/20, B01D 53/44, B01D 53/04

(54) **DUNSTABZUGSVORRICHTUNG MIT GERUCHSFILTER UND VERFAHREN ZUM REGENERIEREN VON GERUCHSFILTERN**
VAPOUR EXTRACTION DEVICE WITH ODOUR FILTER AND METHOD FOR THE REGENERATION OF ODOUR FILTERS
DISPOSITIF FORMANT HOTTE ASPIRANTE À FILTRE À ODEUR ET PROCÉDÉ DE RÉGÉNÉRATION DE FILTRES À ODEUR

(30) Priorität: 02.02.2017 DE 102017201651
(43) Veröffentlichungstag der Anmeldung: 08.08.2018
(73) Patentinhaber: BSH Hausgeräte GmbH, 81739 München (DE)
(72) Erfinder: Herbst, Jens, 75015 Bretten (DE); Kammerer, Simon, 68723 Schwetzingen (DE); Vollmar, Daniel, 76131 Karlsruhe (DE)

(56) Entgegenhaltungen:
- EP-A1- 2 857 758
- EP-A1- 2 893 967
- WO-A1-2016/189958
- GB-A- 2 448 522

## Beschreibung

Die Erfindung betrifft eine Dunstabzugsvorrichtung mit Geruchsfilter und ein Verfahren zum Regenerieren von Geruchsfiltern.

Bei Dunstabzugsvorrichtungen, insbesondere bei Dunstabzugsvorrichtungen, die in Küchen verwendet werden, ist es in der Regel die Aufgabe der Dunstabzugsvorrichtung außer flüssigen oder partikelförmigen Verunreinigungen auch Geruchsstoffe aus Dünsten und Wrasen auszufiltern. Hierzu werden in Dunstabzugsvorrichtungen sogenannte Geruchsfilter verwendet. Die Geruchsfilter können als Filtermaterial beispielsweise Aktivkohle verwend en. In dem Geruchsfilter werden Geruchsmoleküle absorbiert. Allerdings ist das Aufnahmevermögen des Geruchsfilters für Geruchsmoleküle begrenzt. Der Geruchsfilter muss daher in regelmäßigen Intervallen ausgetauscht werden. Alternativ ist es auch möglich den Geruchsfilter durch eine sogenannte Regenerierungsbehandlung so zu behandeln, dass die Absorptionsfähigkeit für Geruchsstoffe wieder hergestellt wird.

In der Regel werden Geruchsstoffe zu diesem Zweck der Dunstabzugsvorrichtung entnommen und einer Regenerationsvorrichtung zu geführt.

Zudem ist aus der EP 2 893 967 A1 eine Vorrichtung und ein Verfahren zum Beseitigen von Gerüchen beschrieben. Bei diesem Verfahren wird in das Gehäuse eines Geruchsfilters eine seitliche Zwischenwand eingezogen, über die ein den Raum vor und nach dem Geruchsfilter verbindender Kanal gebildet wird. Zudem wird ein Katalysator vorgesehen, zu dem Luft über ein Zusatzgebläse transportiert wird. Das Zusatzgebläse und der Katalysator sind ist in dem Raum unterhalb des Geruchsfilters angeordnet. Die Vorrichtung kann dem Abluftauslass einer Dunstabzugshaube nachgeschaltet werden. In der Dunstabzugshaube ist ein Hauptgebläse vorgesehen, das in Strömungsrichtung vor oder nach der Geruchsfiltervorrichtung liegen kann.

Ein Nachteil, den diese Vorrichtung aufweist, ist, dass diese einen komplexen Aufbau
Weiterer Stand der Technik wird im WO 2016/189958 A1, EP 2 857 758 A1 und GB 2 448 522 A offenbart.
Aufgabe der vorliegenden Erfindung ist es daher eine Lösung zu schaffen, mittels derer der Geruchsfilter für eine lange Betriebsdauer verwendet werden kann und die dennoch einen einfachen Aufbau der Vorrichtung erlaubt.

Der Erfindung liegt die Erkenntnis zugrunde, dass diese Aufgabe gelöst werden kann, indem die Strömungsbedingungen innerhalb der Dunstabzugsvorrichtung, die von dem Gebläse der Dunstabzugsvorrichtung erzeugt werden, auch für den Regenerationsprozess genutzt werden.

Gemäß einem ersten Aspekt wird die Aufgabe daher gelöst durch eine Dunstabzugsvorrichtung, die ein Gehäuse, das mindestens einen Strömungskanal aufweist, mindestens einen Geruchsfilter, der in dem Strömungskanal liegt, und mindestens ein Gebläse mit einer Rotornabe und mindestens einer Rotorschaufel aufweist. Die Dunstabzugsvorrichtung ist dadurch gekennzeichnet, dass die Rotornabe einen sich zumindest bereichsweise in axialer Richtung durch die Rotornabe erstreckenden Hohlraum aufweist, in dem Hohlraum zumindest eine Regenerationseinheit angeordnet ist und im Bereich der Enden der Rotornabe zwischen dem Hohlraum und dem Strömungskanal in der Dunstabzugsvorrichtung jeweils ein Luftdurchlass gebildet ist.

Als Dunstabzugsvorrichtung wird erfindungsgemäß eine Vorrichtung bezeichnet, in die verunreinigte Luft, insbesondere Dünste und Wrasen, die beim Kochen entstehen, eingesaugt und gereinigt wird. Insbesondere wird als Dunstabzugsvorrichtung eine Dunstabzugsvorrichtung für eine Küche bezeichnet, die beispielsweise eine Dunstabzugshaube oder eine Deckenlüftung darstellen kann. Die Dunstabzugsvorrichtung weist ein Gehäuse auf, das mindestens einen Strömungskanal aufweist. Als Gehäuse wird erfindungsgemäß das Gehäuse bezeichnet, in dem das Gebläse der Dunstabzugsvorrichtung aufgenommen ist. Das Gehäuse kann die Außenseite der Dunstabzugsvorrichtung bilden. Es liegt aber auch im Rahmen der Erfindung, dass das Gehäuse in einem weiteren Dunstabzugsgehäuse aufgenommen ist oder von Verblendungsteilen umgeben ist. Als Strömungskanal in dem Gehäuse wird ein Raum verstanden, der den Lufteinlass und Luftauslass des Gehäuses miteinander verbindet und durch den im normalen Betrieb die zu reinigende Luft in dem Gehäuse befördert wird.

Die Dunstabzugsvorrichtung weist zudem mindestens einen Geruchsfilter auf. Als Geruchsfilter wird ein Bauteil verstanden, an dem Geruchsstoffe aus dem Luftstrom ausgefiltert werden können. Insbesondere wird als Geruchsfilter im Sinne der Erfindung ein Filter verstanden, an dem Geruchsstoffe abgeschieden oder anderweitig gebunden werden. Der Geruchsfilter stellt vorzugsweise einen Aktivkohlefilter dar.

Der Geruchsfilter liegt in dem Strömungskanal des Gehäuses der Dunstabzugsvorrichtung. Vorzugsweise erstreckt sich der Geruchsfilter zumindest zeitweise und besonders bevorzugt permanent über die gesamte Querschnittsfläche des Strömungskanals. Hierdurch wird die zu reinigende Luft, die durch den Strömungskanal geführt wird, durch den Geruchsfilter geleitet und dort von Geruchsstoffen befreit.

Die Dunstabzugsvorrichtung weist mindestens ein Gebläse mit einer Rotornabe und mindestens einer Rotorschaufel auf. Der aus Rotor und Rotornabe bestehende Rotor bildet zusammen mit dem Gehäuse ein Gebläse, das auch als Ventilator bezeichnet werden kann. Besonders bevorzugt ist das Gebläse ein Axialgebläse. Durch das Gebläse wird Luft daher vorzugsweise in axialer Richtung innerhalb des Gehäuses der Dunstabzugsvorrichtung befördert. Die Rotorschaufel oder Rotorschaufeln erstrecken sich von der Rotornabe aus nach außen in den Strömungskanal.

Die Dunstabzugsvorrichtung ist dadurch gekennzeichnet, dass die Rotornabe einen sich zumindest bereichsweise in axialer Richtung durch die Rotornabe erstreckenden Hohlraum aufweist. Der Hohlraum in der Rotornabe kann auch als Kavität bezeichnet werden. Der Hohlraum liegt im Inneren der Rotornabe und erstreckt sich vorzugsweise über die gesamte Länge der Rotornabe.

Die Rotornabe kann daher im einfachsten Fall durch ein Rohr oder einen anderen rotationssymmetrischen Hohlkörper gebildet sein.

Gemäß einer Ausführungsform nimmt der Durchmesser der Rotornabe über deren Länge zu, insbesondere linear oder kurvenförmig. Somit kann die Rotornabe auch durch eine rotationssymmetrische Wand gebildet sein, deren Durchmesser von einem Ende der Rotornabe zu dem anderen Ende zunimmt. Hierbei kann die Rotornabe die Form eines Kegelstumpfes bilden. In diesem Fall weist das Gehäuse eine entsprechende Form auf, das heißt dessen Durchmesser nimmt im gleichen Maße zu. Der Querschnitt des Strömungskanals ist daher auch bei dieser Ausführungsform über dessen Länge gleichbleibend. Bei dieser Ausführungsform stellt das Gebläse ein Diagonalgebläse dar.

Weiterhin ist es auch möglich, dass die Rotornabe eine Form aufweist, bei der die Zunahme des Durchmessers über die Länge der Rotornabe kurvenförmig verläuft. Auch bei dieser Ausführungsform weist dann das Gehäuse vorzugsweise eine Form auf, die der Form der Rotornabe entspricht. Vorzugsweise wird bei dieser Ausführungsform der Rotornabe die Krümmung so groß gewählt, dass der zwischen der Rotornabe und dem Gehäuse gebildete Strömungskanal von der axialen Ausrichtung in die radiale Ausrichtung übergeht. In diesem Fall stellt das Gebläse somit ein Radialgebläse dar. Bei dieser Ausführungsform erstreckt sich zumindest der Bereich des Hohlraumes, der dem Lufteinlass des Gebläses zugewandt ist, in axialer Richtung.

In dem Hohlraum in der Rotornabe ist zumindest eine Regenerationseinheit angeordnet. Als Regenerationseinheit wird eine Einheit in der Dunstabzugsvorrichtung bezeichnet, in der Geruchsstoffe durch ein aktives System chemisch gebunden, durch Reaktion umgewandelt und/oder physikalisch zerstört werden. Die Geruchsstoffe werden somit in der Regenerationseinheit aus der Luft entfernt. Ein Beispiel für die Regenerationseinheit ist eine UV-Einheit, in der die Geruchsstoffe mittels UV-Strahlung behandelt werden.

In dem Bereich der Enden der Rotornabe ist zwischen dem Hohlraum und dem Strömungskanal in der Dunstabzugsvorrichtung jeweils ein Luftdurchlass gebildet. Dieser Luftdurchlass kann durch eine oder mehrere Öffnungen in der Rotornabe in deren Wand nahe der Enden der Rotornabe gebildet sein. Vorzugsweise wird der Luftdurchlass aber durch einen Spalt zwischen dem jeweiligen Ende der hohlen Rotornabe und dem Gehäuse gebildet. Indem die Enden der Rotornabe zu dem Gehäuse beabstandet sind, kann Luft über diesen Spalt aus dem Strömungskanal in den Hohlraum im Inneren der Rotornabe eintreten.

Mit der erfindungsgemäßen Dunstabzugsvorrichtung ist es daher möglich Luft, die durch den Geruchsfilter in dem Strömungskanal geführt wurde, in den Hohlraum im Inneren der Rotornabe und zu der darin vorgesehenen Regenerationseinheit zu leiten und über das gegenüberliegenden Ende der Rotornabe aus dem Hohlraum zurück in den Strömungskanal zu leiten. Durch diesen Kurzschluss kann Luft, die in der Regenerationseinheit von Geruchsstoffen gereinigt wurde, den Geruchsfilter durchströmen und dabei aus diesem Geruchsstoffe ausspülen, das heißt desorbieren. Indem der Hohlraum in der Rotornabe mit dem Strömungskanal über Luftdurchlässe verbunden ist, kann diese Strömung der Luft, die auch als Regenerationsströmung oder Rezirkulationsströmung bezeichnet werden kann, durch das Gebläse der Dunstabzugsvorrichtung erzeugt werden. Es ist daher nicht erforderlich ein gesondertes Gebläse in der Dunstabzugsvorrichtung vorzusehen und anzutreiben. Dennoch kann mit der vorliegenden Erfindung ein zuverlässiges Ausspülen von Geruchsstoffen aus dem Geruchsfilter und Entfernen der Geruchsstoffe aus der Luft gewährleistet werden, ohne dass der Geruchsfilter aus der Dunstabzugsvorrichtung entfernt werden muss.

Gemäß einer bevorzugten Ausführungsform weist das Gehäuse einen Lufteinlass und einen Luftauslass auf und zumindest an dem Luftauslass des Gehäuses ist mindestens ein Verschlusselement zum zeitweiligen Verschließen des Luftauslasses angeordnet. Als Lufteinlass wird die Öffnung bezeichnet, über die zu reinigende Luft in das Gehäuse eintreten kann. Der Lufteinlass liegt bei der montierten Dunstabzugsvorrichtung in der Regel in der Unterseite des Gehäuses. Der Lufteinlass weist vorzugsweise die Form eines Ringspaltes auf. Als Luftauslass wird die Öffnung an dem Gehäuse bezeichnet, über die die gereinigte Luft, die auch als Reinluft bezeichnet werden kann aus dem Gehäuse austreten kann. Bei einem Axialgebläse und einem Diagonalgebläse liegt der Luftauslass in der montierten Dunstabzugsvorrichtung vorzugsweise in der Oberseite des Gebläses. Bei einem Radialgebläse kann der Luftauslass in der Seitenwand des Gehäuses liegen. Der Luftauslass weist vorzugsweise die Form eines Ringspaltes auf. Es können erfindungsgemäß auch mehrere Lufteinlässe und mehrere Luftauslässe vorgesehen sein. Im Folgenden wird die Erfindung zum leichteren Verständnis unter Bezugnahme auf ein Gehäuse mit einem Lufteinlass und einem Luftauslass beschrieben.

An dem Luftauslass ist vorzugsweise mindestens ein Verschlusselement zum zeitweiligen Verschließen des Luftauslasses angeordnet. Das Verschlusselement kann beispielsweise ein Deckel sein, der auf die Luftauslassöffnung aufgebracht werden kann. Alternativ ist es aber auch möglich dass mehrere Verschlusselemente vorgesehen sind, die beispielsweise bewegliche Lamellen darstellen. Die Ansteuerung des oder der Verschlusselemente kann mechanisch oder elektrisch erfolgen. Durch das Verschlusselement beziehungsweise die Verschlusselemente kann der Luftauslass verschlossen und vorzugsweise dicht verschlossen werden. Hierzu können zusätzlich Dichtelemente an dem Gehäuse und oder dem oder den Verschlusselementen vorgesehen sein. Über das Verschlusselement oder die Verschlusselemente wird die Strömung in dem Gebläse geändert. Da die Luft, die durch den Rotor bewegt wird, nicht mehr oder nur noch zu einem geringen Teil aus dem Luftauslass austreten kann, wird die Luft über den Luftdurchlass in das Innere des Rotors geführt. Da somit der gesamte Volumenstrom oder zumindest annähernd der gesamte Volumenstrom, der durch den Rotor bewegt wird, in das Innere der Rotornabe geleitet wird, kann die Menge an Geruchsstoffen, die aus der Luft in der Regenerationseinheit entfernt werden kann, maximiert werden.

Da die Rotorschaufeln sich in den Strömungskanal erstrecken, wird durch den Rotor ein Unterdruck erzeugt, der Luft über den Lufteinlass ansaugt. Zudem wird aber auch die Luft, die durch den Hohlraum der Rotornabe geleitet wurde, hierdurch angesaugt. Es ist daher nicht zwangsweise erforderlich während eines Regenerationsprozesses auch den Lufteinlass zu verschließen. Dennoch kann erfindungsgemäß vorgesehen sein, zusätzlich zu dem Verschlusselement oder den Verschlusselementen an dem Luftauslass auch an dem Lufteinlass ein oder mehrere Verschlusselemente vorzusehen, die den Lufteinlass zeitweise verschließen können.

Je nach Form der Rotornabe und entsprechender Form des Gehäuses, kann der Luftauslass in einer Stirnseite oder in einer Seitenwand des Gehäuses liegen. Bei einem Axialgebläse liegt der Luftauslass in einer der Stirnseiten des Gehäuses, insbesondere in der Oberseite. Bei einem Radialgebläse hingegen ist der Luftauslass vorzugsweise in der Seitenwand des Gehäuses eingebracht.

Gemäß einer bevorzugten Ausführungsform ist die Rotornabe über Speichen mit der Motorachse des Motors des Gebläses beziehungsweise des Rotors verbunden. Die Verbindung der Rotornabe mit der Motorachse kann damit auch als Speichenaufhängung bezeichnet werden. Indem Speichen verwendet werden, die die Rotornabe mit der Motorachse des Gebläsemotors verbinden, wird die Strömung im Inneren der Rotornabe nur geringfügig behindert. Besonders bevorzugt sind die Speichen hierbei so ausgestaltet, dass diese lüftungstechnisch förderlich sind. Als lüftungstechnisch förderlich wird eine Speichengeometrie bezeichnet, die beispielsweise bei einer drallbehafteten Anströmung den Anströmwinkel mit berücksichtigt. Dies kann durch eine einsprechende Form und Anordnung der Speichen in der Rotornabe realisiert werden. Hierdurch werden die Druckverluste durch die Speichen gesenkt und damit die Energieeffizienz gesteigert.

Gemäß einer weiteren Ausführungsform sind die Speichen als Gebläseschaufel geformt. Dies bedeutete, dass die Speichen Rotorschaufeln darstellen. Der Ausdruck Gebläseschaufel wird lediglich verwendet, um eine Verwechslung mit den sich außen von der Rotornabe in den Strömungskanal erstreckenden Rotorschaufeln zu verhindern. Indem die Speichen, die im Inneren der Rotornabe liegen und diese mit der Motorachse des Motors des Gebläses verbinden, als Gebläseschaufel ausgebildet sind, kann durch die Speichen eine zusätzliche Strömung im Inneren der Rotornabe erzeugt werden. Hierdurch entsteht ein konstanter Volumenstrom im Inneren der Rotornabe, der einen Nebenstrom zu der Hauptströmung in dem Strömungskanal darstellt. Bei dieser Ausführungsform kann auch während des Normalbetriebes, insbesondere bei offenem Luftauslass somit ein Nebenstrom über das Innere der Rotornabe und damit über die Regenerationseinheit geschaffen werden. Zudem wird bei dieser Ausführungsform der Nebenstrom aus dem Inneren der Rotorachse erneut dem Geruchsfilter zugeführt und somit erneut gereinigt. Bei dieser Ausführungsform wird daher vorzugsweise der Rotor auf eine höhere Volumenstrommenge eingestellt.

Gemäß einer Ausführungsform liegt mindestens ein Geruchsfilter in Strömungsrichtung hinter der mindestens einen Rotorschaufel in dem Strömungskanal. Hierdurch wird die Luft, die durch den Rotor in den Strömungskanal eingesaugt wurde, durch den sich ausbildenden Staudruck vor dem Geruchsfilter durch den Geruchsfilter gedrückt. Auch die von dem Inneren der Rotornabe austretende regenerierte, das heißt gereinigte Luft wird durch den Staudruck durch den Geruchsfilter gedrückt und löst damit Geruchsstoffe aus dem Geruchsfilter.

Gemäß einer weiteren Ausführungsform kann alternativ oder zusätzlich zu dem Geruchsfilter, der in Strömungsrichtung hinter den Rotorschaufeln liegt, die mindestens eine Rotorschaufel zumindest bereichsweise durch einen Geruchsfilter gebildet sein. Hierdurch kann die eine große Oberfläche zum Abscheiden von Geruchsstoffen genutzt werden.

Gemäß einer bevorzugten Ausführungsform umfasst Die Dunstabzugsvorrichtung mindestens einen Fettfilter. Der Fettfilter kann in dem Gehäuse aufgenommen sein, oder in der Dunstabzugsvorrichtung vor dem Lufteinlass des Gehäuses angeordnet sein. In jedem Fall ist der Fettfilter in Strömungsrichtung aber vorzugsweise vor der mindestens einen Rotorschaufel angeordnet. Hierdurch kann ein Verschmutzen der Rotorschaufeln durch flüssige Verunreinigungen, insbesondere Fett, verhindert werden.

Gemäß einer weiteren Ausführungsform weist die Dunstabzugsvorrichtung eine Heizvorrichtung zum Beheizen des Luftstroms in dem Gehäuse auf. Das Ausspülen von Geruchsstoffen, insbesondere Geruchsmolekülen, das beim Durchspülen des Geruchsfilters mit Frischluft beziehungsweise gereinigter Luft auftritt, wird auch als Desoprtion bezeichnet. Die Desorptionsrate, das heißt die Menge an Geruchsstoffen, insbesondere Geruchsmolekülen, die ausgespült werden, ist temperaturabhängig und nimmt mit steigender Temperatur zu. Indem eine Heizvorrichtung vorgesehen ist, die die zirkulierende Luft in dem Gehäuse erwärmt, wird somit die Desorptionsrate gesteigert. Da in dem Gehäuse zumindest während des Regernationsprozesses eine zirkulierende Strömung erzeugt wird, die auch als Kurzschlussströmung bezeichnet werden kann, findet kein oder zumindest kein wesentlicher Luftaustausch mit der Umgebung statt. Dies wirkt sich positiv auf den thermischen Wirkungsgrad des Regenerationsprozesses aus.

Alternativ oder zusätzlich kann eine Luftbefeuchtungsvorrichtung zur Einleitung von Flüssigkeit in das Gehäuse vorgesehen sein. Hierdurch können weitere Stoffe von dem Geruchsfilter gelöst werden und damit die Regeneration des Geruchsfilters weiter verbessert.

Gemäß einem weiteren Aspekt betrifft die Erfindung ein Verfahren zum Regernieren eines Geruchsfilters in einer erfindungsgemäßen Dunstabzugsvorrichtung. Als Regenerieren des Geruchsfilters wird das Desorbieren, das heißt Ausspülen von Geruchsstoffen aus dem Geruchsfilter und ein anschließendes Behandeln der Geruchsstoffe, mittels dessen die Geruchsstoffe umgewandelt, zerstört oder gebunden werden, bezeichnet. Die Einheit in der die ausgespülten Geruchsstoffe behandelt werden, wird als Regenerationseinheit bezeichnet. Das Verfahren ist dadurch gekennzeichnet, dass zumindest zeitweise zumindest ein Teil der Luftströmung des Strömungskanals in den Hohlraum der Rotornabe geleitet wird. Da bei der erfindungsgemäßen Dunstabzugsvorrichtung in dem Hohlraum der Rotornabe die Regenerationseinheit vorgesehen ist, kann der Regenerationsprozess an zumindest einem Teil der Luftströmung in dem Gebläse durch geführt werden.

Vorteile und Merkmale, die bezüglich der erfindungsgemäßen Dunstabzugsvorrichtung beschrieben werden und wurden, gelten - soweit anwendbar - entsprechend für das erfindungsgemäße Verfahren und umgekehrt.

Erfindungsgemäß kann der gesamte Volumenstrom, der in dem Strömungskanal durch den Rotor befördert wird, in das Innere der Rotornabe geleitet und dort gereinigt werden. Alternativ ist es aber auch möglich nur einen Teilstrom, der auch als Nebenstrom bezeichnet werden kann, in das Innere der Rotornabe zu leiten. Diese Ausführungsform des Verfahrens kann während des Normalbetriebes der Dunstabzugsvorrichtung erfolgen. Vorzugsweise wird bei dieser Ausführungsform der konstante Volumenstrom in dem Inneren der Rotornabe durch Gebläseschaufeln erzeugt, die die Speichen bilden, über die die rotierende Rotornabe mit dem Motor verbunden ist.

Gemäß einer bevorzugten Ausführungsform wird zumindest der Luftauslass des Gehäuses der Dunstabzugsvorrichtung zeitweise verschlossen. Insbesondere wird der Luftauslass vorzugsweise durch ein oder mehrere Verschlusselemente während des Regenerationsprozesses verschlossen. Hierdurch kann die gezielte Zuführung der Luft zu dem Inneren der Rotornabe sichergestellt werden. Wird während der Luftauslass verschlossen ist, das Gebläse der Dunstabzugsvorrichtung betrieben, so pumpt dieses gegen das Verschlusselement oder die Verschlusselemente. Durch einen Spalt am Ende der Rotornabe zu dem Gehäuse kann durch den höheren Druck die Luft entlang der Innenseite des Hohlraums der Rotornabe entweichen. Hierbei passiert die Luft die Speichen und gelangt zu der Regenerationseinheit. Nach dem Durchströmen durch die Regenerationseinheit wird die gereinigte Luft nahe dem Lufteinlass über einen entsprechenden Spalt wieder in den Strömungskanal ausgeblasen. Der Rotor pumpt somit konstant Luft durch den Geruchsfilter und die Regenerationseinheit, bis der Regenerationsprozess abgeschlossen ist, das heißt keine oder nur noch geringe Mengen an Geruchsstoffen in dem Geruchsfilter vorliegen.

Gemäß einer weiteren Ausführungsform wird zusätzlich zu dem Luftauslass auch der Lufteinlass des Gehäuses der Dunstabzugsvorrichtung zeitweise verschlossen. Dieser kann insbesondere während des Regerationsprozesses verschlossen werden. Hierdurch wird das Eintreten von Luft, die mit Geruchsstoffen beladen ist, in das Gehäuse während dem Regenerationsprozess zuverlässig verhindert. Wie oben aber bereits ausgeführt, ist das Verschließen des Lufteinlasses nicht zwingend erforderlich. Aufgrund der sich bei geschlossenem Luftauslass einstellenden Druckverhältnisse und Luftströmung wird auch ohne Verschließen des Lufteinlasses die Menge an verunreinigte Luft, die in das Gehäuse eintreten kann, gering sein.

Die Erfindung wird im Folgenden erneut unter Bezugnahme auf die beiliegenden Figuren beschrieben. Es zeigen:
- Figur 1:: eine schematische Blockdarstellung einer Ausführungsform einer erfindungsgemäßen Dunstabzugsvorrichtung im Normalbetrieb;
- Figur 2:: eine schematische Blockdarstellung einer Ausführungsform der Dunstabzugsvorrichtung nach Figur 1 im Regenerationsbetrieb;
- Figur 3:: eine schematische Blockdarstellung einer zweiten Ausführungsform der Dunstabzugsvorrichtung im Regenerationsbetrieb; und
- Figur 4:: eine schematische Blockdarstellung einer dritten Ausführungsform der Dunstabzugsvorrichtung im Regenerationsbetrieb.

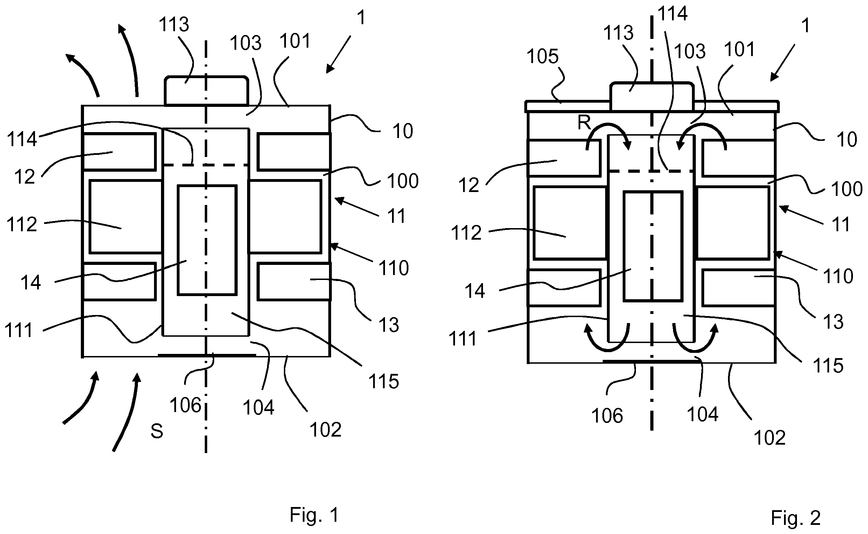

In Figur 1 ist der Aufbau einer Ausführungsform der erfindungsgemäßen Dunstabzugsvorrichtung 1 schematisch in Blockdarstellung gezeigt. Die Dunstabzugsvorrichtung 1 weist ein Gehäuse 10 auf, das in der dargestellten Ausführungsform ein rotationssymmetrisches Gehäuse 10 ist, das eine Zylinderform aufweist. In dem Gehäuse ist ein Strömungskanal 100 gebildet. Der Strömungskanal 100 ist seitlich durch die Gehäusewand, insbesondere die Zylinderwand, des Gehäuses 10 und nach innen durch eine Rotornabe 110 begrenzt. In der Unterseite des Gehäuses 10, das heißt der der anströmenden Luft zugewandten Seite des Gehäuses 10, weist das Gehäuse 10 einen Lufteinlass 102 auf. Die Unterseite des Gehäuses 10 stellt die Seite dar, die einem unterhalb der Dunstabzugsvorrichtung 1 angeordneten Kochfeld (nicht gezeigt) zugewandt ist. Der Lufteinlass 102 ist in der dargestellten Ausführungsform zwischen der Zylinderwand des Gehäuses 10 und einer Bodenplatte 106, die in der Mitte des Gehäuses, das heißt im Bereich der Symmetrieachse des Gehäuses 10 liegt. Die Bodenplatte 106 kann über Verbindungselemente, nicht gezeigt mit der Zylinderwand des Gehäuses 10 verbunden sein. Diese Verbindungselemente weisen vorzugsweise eine Geometrie und Größe auf, die die Strömung durch den Lufteinlass 102 nicht behindern.

In der Oberseite des Gehäuses 10 ist ein Luftauslass 101 gebildet. Dieser Luftauslass 101 ist in der dargestellten Ausführungsform zwischen der Zylinderwand des Gehäuses 10 und einem Motor 113 gebildet. Es liegt allerdings auch im Rahmen der Erfindung, dass der Luftauslass 101 zwischen der Zylinderwand des Gehäuses 10 und einer Deckplatte (nicht gezeigt) gebildet ist, die in der Mitte des Gehäuses 10 vorgesehen ist.

In dem Gehäuse 10 ist ein Geruchsfilter 12 so angeordnet, dass dieser im Strömungskanal 100 liegt und den Querschnitt des Strömungskanals 100 möglichst vollständig abdeckt. In der Figur 1 ist der Geruchsfilter 12 so gezeigt, dass dieser an dem Gehäuse 10 befestigt ist. Der Spalt, der zwischen der Rotornabe 111 und dem Geruchsfilter 12 besteht, ist möglichst klein und in der Figur nur zur besseren Erkennbarkeit der Elemente der Dunstabzugsvorrichtung 1 gezeigt.

In dem Gehäuse 10 ist weiterhin ein Rotor 110 aufgenommen. Der Rotor 110 und das Gehäuse 10 bilden zusammen das Gebläse 11 der Dunstabzugsvorrichtung 1. In der in Figur 1 gezeigten Ausführungsform stellt das Gebläse 11 ein Axialgebläse dar. Der Rotor 110 besteht aus einer Rotornabe 111 und aus Rotorschaufeln 112, die an der Außenseite der Rotornabe 111 an dieser befestigt sind. Die Rotorschaufeln 112 ragen in den Strömungskanal 100 des Gehäuses 10 und weisen vorzugsweise einen Außendurchmesser auf, der dem Innendurchmesser des Gehäuses 10 entspricht beziehungsweise geringfügig kleiner ist als der Innendurchmesser des Gehäuses 10. Weiterhin umfasst das Gebläse 11 beziehungsweise der Rotor 110 einen Motor 113. Die Rotornabe 111 weist im Inneren einen Hohlraum 115 auf. Insbesondere wird die Rotornabe 111 in der dargestellten Ausführungsform durch ein zylinderförmiges Rohr gebildet, das an der Oberseite und Unterseite offen ist. Der Hohlraum 115 erstreckt sich somit bei der gezeigten Ausführungsform über die gesamte Länge der Rotornabe 111 in axialer Richtung. Die Achse des Motors 113 ist über Speichen 114, die sich in dem Hohlraum 115 der Rotornabe 111 liegen mit der Rotornabe 111 verbunden. Die Rotornabe 111 ist daher eine mitlaufende Rotornabe 111. Die Speichen 114 erstrecken sich vorzugsweise in radialer Richtung von der Motorachse zu der Innenseite der hohlen Rotornabe 111.

In dem Hohlraum 115 der Rotornabe 111 ist unterhalb der Speichen 114, das heißt in Strömungsrichtung nach den Speichen 114 eine Regenerationseinheit 14 angeordnet. Die Regenerationseinheit 14 kann an der Innenseite der Rotornabe 111 und/oder an der Motorachse befestigt sein. Alternativ kann die Regenerationseinheit 14 auch über Verbindungselemente (nicht gezeigt) mit dem Gehäuse 10, beispielsweise einer Bodenplatte 106 des Gehäuses 10 verbunden sein.

Die Länge der Rotornabe 111 ist geringer als die Höhe des Gehäuses 10, das heißt der Abmessung des Gehäuses 10 in axialer Richtung. Hierdurch ist zwischen den beiden Enden der Rotornabe 111 und dem Gehäuse 10, insbesondere der Bodenplatte 106 und dem Motor 113 ein Spalt gebildet, der jeweils einen Luftdurchlass 103, 104 bildet. Über diese Luftdurchlässe 103, 104 ist der Hohlraum 105 der Rotornabe 111 mit dem Strömungskanal 100 verbunden.

Weiterhin ist in dem Gehäuse 10 ein Fettfilter 13 vorgesehen. Dieser liegt in dem Strömungskanal 100 und ist in Strömungsrichtung vor den Rotorschaufeln 12 angeordnet. In der Figur 1 ist der Fettfilter 13 so gezeigt, dass dieser an dem Gehäuse 10 befestigt ist. Der Spalt, der zwischen der Rotornabe 111 und dem Fettfilter 13 besteht, ist möglichst klein und in der Figur nur zur besseren Erkennbarkeit der Elemente der Dunstabzugsvorrichtung 1 gezeigt.

Wird bei der Ausführungsform der Dunstabzugsvorrichtung 1 nach Figur 1 das Gebläse angeschaltet, das heißt die Rotornabe 111 über den Motor 113 mittels der Speichen 114 angetrieben, so wird durch die sich mit der Rotornabe 111 bewegenden Rotorschaufeln 112 eine Strömung S erzeugt, mittels derer Luft über den Lufteinlass 102 in das Gehäuse 10 und insbesondere in den Strömungskanal 100 gesaugt wird. Die Luft tritt zunächst durch den Fettfilter 13 hindurch und wird dort von flüssigen Verunreinigungen, wie insbesondere Fett, befreit. Durch die Rotorschaufeln 112 wird die Luft weiter befördert und aufgrund des Staudruckes durch den Geruchsfilter 12 gedrückt. In dem Geruchsfilter 12 wird die Luft von Geruchsstoffen, insbesondere von Geruchsmolekülen, befreit. Der Geruchsfilter kann beispielsweise ein Aktivkohlefilter sein. Die so von flüssigen Verunreinigungen und Geruchsstoffen befreite Luft wird über den Luftauslass 101 in die Umgebung, beispielsweise in den Raum, in dem die Dunstabzugsvorrichtung 1 betrieben wird, abgegeben. Dieser Strömungsverlauf ist in Figur 1 schematisch durch die Pfeile S angedeutet.

In Figur 2 ist die Dunstabzugsvorrichtung 1 nach Figur 1 in einem Regenerationsbetrieb gezeigt. In diesem Betrieb wird der Luftauslass 101 in der gezeigten Ausführungsform durch Verschlusselemente 105 verschlossen. Die Verschlusselemente 105 können verschwenkbar oder verschiebbar an dem Gehäuse 10 befestigt sein und sind in der Figur 1 nur zur der besseren Erkennbarkeit der Elemente der Dunstabzugsvorrichtung 1 nicht gezeigt.

Wird bei verschlossenem Luftauslass 101 das Gebläse 10 und insbesondere der Rotor 110 durch den Motor 113 angetrieben, so pumpt der Rotor 110 mit den Rotorschaufeln 112 Luft gegen den verschlossenen Luftauslass 101. Da zwischen dem oberen Ende der Rotornabe 111 und dem Motor 113 oder einer gegebenenfalls vorgesehenen Deckplatte (nicht gezeigt) ein Spalt besteht, wird die Luft über den als Luftdurchlass 103 dienenden Spalt in den Hohlraum 115 der Rotornabe 111 geleitet. Diese Strömung, die auch als Regenerationsströmung bezeichnet werden kann, ist in Figur 2 mit den gekrümmten Pfeilen R angedeutet. In dem Hohlraum passiert die Luft die Speichen 114 und gelangt zu der Regenerationseinheit 14. In dieser wird die Luft von Geruchsstoffen befreit, indem die Geruchsstoffe entweder gebunden, zerstört und/oder umgewandelt werden. Nach dem Verlassen der Regenerationseinheit 14 wird die gereinigte Luft über der Luftdurchlass 104 wieder in den Strömungskanal 100 geleitet. Die gereinigte Luft wird dabei erneut über den Geruchsfilter 12 geführt und kann dabei Geruchsstoffe, die in dem Geruchsfilter 12 angelagert sind, ausspülen. Die nun mit Geruchsstoffen belastete Luft wird erneut über die Regenerationseinheit 14 geführt und die Geruchsstoffe entfernt. Durch mehrmaliges Durchlaufen, insbesondere wenn keine Geruchsstoffe mehr in dem Geruchsfilter 12 vorliegen, ist der Regenerationsprozess beendet. Die Verschlusselemente 105 können dann wieder so bewegt werden, dass diese den Luftauslass frei geben und der Normalbetrieb der Dunstabzugsvorrichtung 1, der unter Bezugnahme auf Figur 1 beschrieben wurde, kann durchgeführt werden.

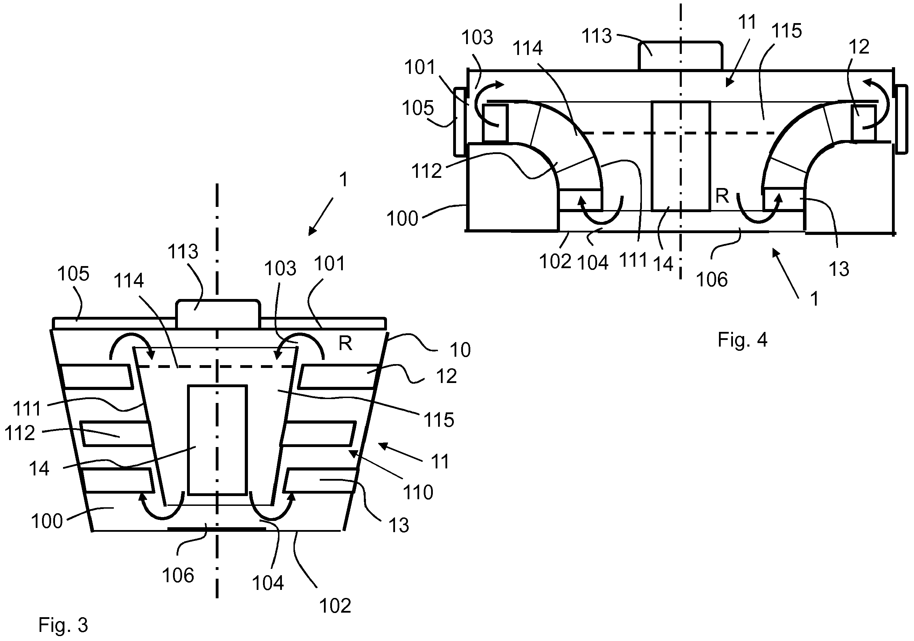

In Figur 3 ist eine weitere Ausführungsform der erfindungsgemäßen Dunstabzugsvorrichtung 1 gezeigt. Diese Ausführungsform unterscheidet sich von der ersten in Figuren 1 und 2 gezeigten Ausführungsform lediglich durch die Form des Rotors 110 und des Gehäuses 10. Die weiteren Bestandteile der Dunstabzugsvorrichtung 1 entsprechen denen der ersten Ausführungsform und werden daher nicht erneut erläutert. In der in Figur 3 gezeigten zweiten Ausführungsform stellt das Gebläse 11 ein Diagonalgebläse dar. Die Rotornabe 111, in der der Hohlraum 115 gebildet ist, weist die Form eines Kegelstumpfes auf. Insbesondere nimmt der Durchmesser der Rotornabe 111 von dem unteren Ende der Rotornabe 111, das heißt dem dem Lufteinlass 102 zugewandten Ende, zu dem oberen Ende der Rotornabe 111, das heißt dem dem Luftauslass 101 zugewandten Ende, linear zu. Das Gehäuse 10 weist ebenfalls die Form eines Kegelstumpfes auf. Der Durchmesser des Gehäuses 10 ist größer als der der Rotornabe 111 und nimmt in dem gleichen Maß wie der Durchmesser der Rotornabe 111 zu. Hierdurch wird auch bei der zweiten Ausführungsform ein Strömungskanal 100 gebildet, der über dessen Länge einen gleichbleibenden Querschnitt aufweist. Auch bei dieser Ausführungsform der Dunstabzugsvorrichtung 1 kann eine Regeneration des Geruchsfilters durch den oben beschriebenen Regenerationsprozess durchgeführt werden.

In Figur 4 ist eine dritte Ausführungsform der erfindungsgemäßen Dunstabzugsvorrichtung 1 gezeigt. Diese Ausführungsform unterscheidet sich zu den ersten zwei Ausführungsformen lediglich durch die Form der Rotornabe 111 und des Gehäuses 10. In der dritten Ausführungsform stellt das Gebläse ein Radialgebläse dar. Die Rotornabe 111, in der der Hohlraum 115 gebildet ist, weist die Form eines kelchförmigen Trichters auf. Insbesondere nimmt der Durchmesser der Rotornabe 111 von dem unteren Ende der Rotornabe 111, das heißt dem dem Lufteinlass 102 zugewandten Ende, zu dem oberen Ende der Rotornabe 111, das heißt dem dem Luftauslass 101 zugewandten Ende, entlang einer Kurve zu. Auch das Gehäuse 10 weist eine entsprechende Kelchform auf. Hierdurch wird auch bei der dritten Ausführungsform ein Strömungskanal 100 gebildet, der über dessen Länge einen gleichbleibenden Querschnitt aufweist. Der Strömungskanal 100 weist bei der dritten Ausführungsform einen Verlauf auf, bei dem dieser sich zunächst in axialer Richtung erstreckt und sich über dessen Länge radial nach außen krümmt. Der Luftauslass 101 liegt daher bei der dritten Ausführungsform der Dunstabzugsvorrichtung 1 in der Seitenwand des Gehäuses 10.

Die Erfindung weist eine Reihe von Vorteilen auf. Ein wesentlicher Vorteil besteht in der gleichzeitigen Verwendung des Gebläses, das für den Normalbetrieb in einer Dunstabzugsvorrichtung vorgesehen ist, und auch als regulärer Ventilator bezeichnet werden kann, für den Normalbetrieb und dem Regenerationsbetrieb. Die Anzahl der Komponenten der Dunstabzugsvorrichtung wird somit gegenüber einer Dunstabzugsvorrichtung mit Zusatzgebläse reduziert und dadurch Kosten gespart. Durch die bauraumtechnische Nutzung des Hohlraumes in der Rotornabe, das heißt der Nabenkavität des Ventilators kann zudem kleiner und kompakter gebaut werden, was die Gesamtgeometrie kompakt hält. Ergibt sich aus der Effektivität eine lebenslange Haltbarkeit des Geruchsfilters kann der Geräteaufbau vereinfacht werden, da die Zugänglichkeit für den Benutzer reduziert werden kann.

Aus Sicht des Benutzers liegt zudem ein Vorteil in einer längeren Lebensdauer des Geruchsfilters. Es sinkt der Aufwand seitens des Benutzers zum Wechseln der Filter. Ein positiver Nebeneffekt liegt in der Reduktion von Müll.

### Bezugszeichenliste

- 1: Dunstabzugsvorrichtung

- 10: Gehäuse
- 100: Strömungskanal
- 101: Luftauslass
- 102: Lufteinlass
- 103: Luftdurchlass
- 104: Luftdurchlass
- 105: Verschlusselement
- 106: Bodenplatte

- 11: Gebläse
- 110: Rotor
- 111: Rotornabe
- 112: Rotorschaufel
- 113: Motor
- 114: Speichen
- 115: Hohlraum

- 12: Geruchsfilter

- 13: Fettfilter

- 14: Regenerationseinheit

- S: Hauptströmungsrichtung
- R: Regenerationsströmung

## Patentansprüche

1. Dunstabzugsvorrichtung, die ein Gehäuse (10), das mindestens einen Strömungskanal (100) aufweist, mindestens einen Geruchsfilter (12), der in dem Strömungskanal (100) liegt, und mindestens ein Gebläse (11) mit einer Rotornabe (111) und mindestens einer Rotorschaufel (112) aufweist, **dadurch gekennzeichnet, dass** die Rotornabe (111) einen sich zumindest bereichsweise in axialer Richtung durch die Rotornabe (111) erstreckenden Hohlraum (115) aufweist, in dem Hohlraum (115) zumindest eine Regenerationseinheit (14) angeordnet ist und im Bereich der Enden der Rotornabe (111) zwischen dem Hohlraum (115) und dem Strömungskanal (100) in der Dunstabzugsvorrichtung (1) jeweils ein Luftdurchlass (103, 104) gebildet ist.

2. Dunstabzugsvorrichtung nach Anspruch 1, **dadurch gekennzeichnet, dass** das Gehäuse (10) einen Lufteinlass (102) und einen Luftauslass (101) aufweist und zumindest an dem Luftauslass (101) des Gehäuses (10) mindesten ein Verschlusselement (105) zum zeitweiligen Verschließen des Luftauslasses (101) angeordnet ist.

3. Dunstabzugsvorrichtung nach einem der Ansprüche 1 oder 2, **dadurch gekennzeichnet, dass** der Durchmesser der Rotornabe (111) über deren Länge zunimmt, insbesondere linear oder kurvenförmig.

4. Dunstabzugsvorrichtung nach einem der Ansprüche 1 bis 3, **dadurch gekennzeichnet, dass** der Luftauslass (101) in einer Stirnseite oder in einer Seitenwand des Gehäuses (10) liegt.

5. Dunstabzugsvorrichtung nach einem der Ansprüche 1 bis 4, **dadurch gekennzeichnet, dass** die Rotornabe (111) über Speichen (114) mit der Motorachse des Motors (113) des Rotors (110) verbunden ist, die vorzugsweise als Gebläseschaufeln geformt sind.

6. Dunstabzugsvorrichtung nach einem der Ansprüche 1 bis 5, **dadurch gekennzeichnet, dass** mindestens ein Geruchsfilter (12) in Strömungsrichtung hinter der mindestens einen Rotorschaufel (112) liegt und/oder dass die mindestens eine Rotorschaufel (112) zumindest bereichsweise durch einen Geruchsfilter (12) gebildet ist.

7. Dunstabzugsvorrichtung nach einem der Ansprüche 1 bis 6, **dadurch gekennzeichnet, dass** die Dunstabzugsvorrichtung (1) mindestens einen Fettfilter (13) umfasst und der Fettfilter (13) in Strömungsrichtung vor der mindestens einen Rotorschaufel (112) angeordnet ist.

8. Dunstabzugsvorrichtung nach einem der Ansprüche 1 bis 7, **dadurch gekennzeichnet, dass** die Dunstabzugsvorrichtung (1) eine Heizvorrichtung zum Beheizen des Luftstroms in dem Gehäuse (10) und/oder eine Luftbefeuchtungsvorrichtung zur Einleitung von Flüssigkeit in das Gehäuse (10) aufweist.

9. Verfahren zum Regernieren eines Geruchsfilters in einer Dunstabzugsvorrichtung gemäß einem der Ansprüche 1 bis 8, **dadurch gekennzeichnet, dass** zumindest zeitweise zumindest ein Teil der Luftströmung des Strömungskanals (100) in den Hohlraum (115) der Rotornabe (111) geleitet wird.

10. Verfahren nach Anspruch 9, **dadurch gekennzeichnet, dass** zumindest der Luftauslass (101) des Gehäuses (10) der Dunstabzugsvorrichtung (1) zeitweise verschlossen wird.

11. Verfahren nach einem der Ansprüche 9 oder 10, **dadurch gekennzeichnet, dass** der Lufteinlass (102) des Gehäuses (10) der Dunstabzugsvorrichtung (1) zeitweise verschlossen wird.

## Claims

1. Extractor device, which has a housing (10), said housing (10) having at least one flow duct (100), at least one odour filter (12), which lies in the flow duct (100), and at least one fan (11) with a rotor hub (111) and at least one rotor blade (112), **characterised in that** the rotor hub (111) has a cavity (115) extending through the rotor hub (111) in the axial direction at least in regions, at least one regenerative unit (14) is arranged in the cavity (115) and an air aperture (103, 104) is formed in the extractor device (1) in the region of the ends of the rotor hub (111) in each case between the cavity (115) and the flow duct (100).

2. Extractor device according to claim 1, **characterised in that** the housing (10) has an air inlet (102) and an air outlet (101) and at least one closure element (105) for temporarily closing off the air outlet (101) is arranged at least at the air outlet (101) of the housing (10).

3. Extractor device according to one of claims 1 or 2, **characterised in that** the diameter of the rotor hub (111) increases over its length, in particular linearly or in a curved shape.

4. Extractor device according to one of claims 1 to 3, **characterised in that** the air outlet (101) lies in an end face or in a side wall of the housing (10).

5. Extractor device according to one of claims 1 to 4, **characterised in that** the rotor hub (111) is connected to the motor axis of the motor (113) of the rotor (110) via spokes (114), which are preferably shaped as fanblades.

6. Extractor device according to one of claims 1 to 5, **characterised in that** at least one odour filter (12) lies behind the at least one rotor blade (112) in the direction of flow and/or the at least one rotor blade (112) is formed by an odour filter (12), at least in regions.

7. Extractor device according to one of claims 1 to 6, **characterised in that** the extractor device (1) comprises at least one grease filter (13) and the grease filter (13) is arranged in front of the at least one rotor blade (112) in the direction of flow.

8. Extractor device according to one of claims 1 to 7, **characterised in that** the extractor device (1) has a heating device for heating the air flow in the housing (10) and/or a humidity device for introducing liquid into the housing (10).

9. Method for regeneration of an odour filter in an extractor device according to one of claims 1 to 8, **characterised in that** at least for a time, at least part of the air flow of the flow duct (100) is conducted into the cavity (115) of the rotor hub (111).

10. Method according to claim 9, **characterised in that** at least the air outlet (101) of the housing (10) of the extractor device (1) is closed off for a time.

11. Method according to one of claims 9 or 10, **characterised in that** the air inlet (102) of the housing (10) of the extractor device (1) is closed off for a time.

## Revendications

1. Dispositif formant hotte aspirante comportant un corps (10) avec au moins un conduit pour les écoulements (100), au moins un filtre anti-odeur (12) situé dans ce conduit pour les écoulements (100), et au moins un ventilateur (11) ayant un moyeu d'hélice (111) et au moins un pale d'hélice (112), **caractérisé en ce que** ce moyeu d'hélice (111) comporte une cavité (115) s'étendant au moins en partie dans la direction axiale à travers le moyeu d'hélice (111), dans la cavité (115) se trouve au moins une unité de régénération (14) et, dans la zone des extrémités du moyeu d'hélice (111) est formé entre la cavité (115) et le conduit pour les écoulements (100) dans ce dispositif formant hotte aspirante (1) chaque fois un passage pour l'air (103, 104).

2. Dispositif formant hotte aspirante selon la revendication 1, **caractérisé en ce que** le corps (10) comporte une admission d'air (102) et un échappement d'air (101) et au moins un élément de fermeture (105) est disposé au moins sur l'échappement d'air (101) du corps (10) destiné à fermer de temps en temps cet échappement d'air (101).

3. Dispositif formant hotte aspirante selon l'une des revendications 1 ou 2, **caractérisé en ce que** le diamètre du moyeu d'hélice (111) augmente sur sa longueur, en particulier de manière linéaire ou courbée.

4. Dispositif formant hotte aspirante selon l'une des revendications 1 à 3, **caractérisé en ce que** l'échappement d'air (101) est situé dans un côté avant ou dans un côté latéral du corps (10).

5. Dispositif formant hotte aspirante selon l'une des revendications 1 à 4, **caractérisé en ce que** le moyeu d'hélice (111) est raccordé à l'axe de moteur du moteur (113) du rotor (110) par des rayons (114), lesquels sont formés de préférence comme des pales de ventilateur.

6. Dispositif formant hotte aspirante selon l'une des revendications 1 à 5, **caractérisé en ce qu'**au moins un filtre anti-odeur (12) est situé dans le sens des écoulements derrière la au moins une pale d'hélice (112) et/ou **en ce que** cette au moins une pale d'hélice (112) est formée au moins en partie par un filtre anti-odeur (12).

7. Dispositif formant hotte aspirante selon l'une des revendications 1 à 6, **caractérisé en ce que** ce dispositif formant hotte aspirante (1) comprend au moins un filtre à graisse (13) et ce filtre à graisse (13) est disposé dans le sens des écoulements avant la au moins une pale d'hélice (112).

8. Dispositif formant hotte aspirante selon l'une des revendications 1 à 7, **caractérisé en ce que** ce dispositif formant hotte aspirante (1) comporte un dispositif de chauffage destiné au chauffage du flux d'air dans le corps (10) et/ou un dispositif pour l'humidification de l'air destiné à injecter du liquide dans le corps (10).

9. Procédé de régénération d'un filtre anti-odeur dans un dispositif formant hotte aspirante selon l'une des revendications 1 à 8, **caractérisé en ce qu'**au moins temporairement, au moins une partie des écoulements d'air du conduit pour les écoulements (100) est amenée dans la cavité (115) du moyeu d'hélice (111).

10. Procédé selon la revendication 9, **caractérisé en ce qu'**au moins l'évacuation d'air (101) du corps (10) du dispositif formant hotte aspirante (1) est temporairement fermée.

11. Procédé selon l'une des revendications 9 ou 10, **caractérisé en ce que** l'entrée d'air (102) du corps (10) du dispositif formant hotte aspirante (1) est temporairement fermée.
